# EUROPÄISCHE PATENTSCHRIFT

(11) **EP 3 341 843 B1**
(45) Veröffentlichungstag und Bekanntmachung des Hinweises auf die Patenterteilung: **10.07.2019**
(21) Anmeldenummer: 16744345.6
(22) Anmeldetag: 20.07.2016
(51) Int. Cl.: G06F 11/07, G06F 11/16

(54) **VERFAHREN UND VORRICHTUNG ZUM ÜBERWACHEN EINES ZUSTANDES EINER ELEKTRONISCHEN SCHALTUNGSEINHEIT EINES FAHRZEUGS**
METHOD AND APPARATUS FOR MONITORING A STATE OF AN ELECTRONIC CIRCUIT UNIT OF A VEHICLE
PROCÉDÉ ET DISPOSITIF DE SURVEILLANCE D'UN ÉTAT D'UN ENSEMBLE DE COMMANDE ÉLECTRONIQUE D'UN VÉHICULE

(30) Priorität: 24.08.2015 DE 102015216086
(43) Veröffentlichungstag der Anmeldung: 04.07.2018
(73) Patentinhaber: Robert Bosch GmbH, 70442 Stuttgart (DE)
(72) Erfinder: KUTTENBERGER, Alfred, 71263 Weil der Stadt (DE); MUELLER, Bernd, 71229 Leonberg (DE)
(86) Internationale Anmeldenummer: PCT/EP2016/067253
(87) Internationale Veröffentlichungsnummer: WO 2017/032513

(56) Entgegenhaltungen:
- DE-A1- 4 302 483
- DE-A1- 10 007 008
- DE-A1-102008 021 241
- DE-A1-102009 001 048

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

In der Automobilindustrie ist seit 2011 die ISO 26262 eine wichtige Norm zur funktionalen Sicherheit. In ihr werden Anforderungen an sicherheitsrelevante Systeme formuliert. Eine wichtige Klasse von Anforderungen betrifft Coverages (als Diagnostic Coverage, Single point fault metric oder latent fault metric) bezüglich zufälliger Hardwarefehler. Dabei kann zur Darstellung einer hohen Coverage für die Absicherung von Cores innerhalb eines µC ein Dual Core Lockstep vorgesehen sein. Mit geeigneten common cause Maßnahmen ist diese Maßnahme auch für ASIL D angemessen und ausreichend.

Im Fahrerassistenzsegment werden sehr hohe Rechenleistungen benötigt. Es sind aktuell keine Rechner auf dem Markt verfügbar, die die geforderten Rechenleistungen in einer Lockstep-Form darstellen. Es ist deshalb schwierig, eine Absicherung gegen zufällige Hardware-Fehler im Core zu erreichen, die für hohe ASIL geeignet ist. Verstärkt wird diese Problematik noch dadurch, dass geeignete Absicherungen ebenfalls für Caches und RAMs vorliegen müssen. Eine weitere Herausforderung ist es, dass es neben den in der ISO 26262 ausschließlich betrachteten Problemen der funktionalen Sicherheit noch weitere Sicherheitsprobleme gibt: Die Frage, ob ein Algorithmus ausreichend fähig ist, seine Aufgabe zu erfüllen, beispielsweise Fußgänger zu erkennen, wird nicht in der ISO 26262 behandelt. Für diese oft als "funktionale Unzulänglichkeiten" bezeichneten Problemtypen muss aber ebenfalls eine angemessene Lösung gefunden werden, damit ein solches System den Sicherheitserwartungen der Verbraucher entsprechen kann.

Aus der Druckschrift DE 10 2009 001 048 A1 ist eine Vorrichtung zur Prüfung der Arbeitsweise eines Rechnersystems bekannt, welches mindestens zwei Verarbeitungseinheiten aufweist, die in einem ersten Betriebsmodus arbeiten, in welchem die Verarbeitungseinheiten unterschiedliche Programme abarbeiten, oder in einem zweiten Betriebsmodus arbeiten, in welchem die Verarbeitungseinheiten identische Programme abarbeiten, wobei durch ein an eine Umschalteinrichtung ausgegebenes Umschaltsignal zwischen den beiden Betriebsmodi umgeschaltet wird.

Aus der DE 100 07 008 A ist ein Verfahren zur Überwachung einer Datenverarbeitungseinrichtung bekannt. Aus der DE 43 02 483 A ist ein Verfahren zur Steuerung einer Brennkraftmaschine bekannt. Aus der DE 10 2008 021 241 A ist ein Verfahren zum Anzeigen eines Messwerts einer Messgröße bekannt.

### Offenbarung der Erfindung

Vor diesem Hintergrund werden mit dem hier vorgestellten Ansatz ein Verfahren zum Überwachen eines Zustandes einer elektronischen Schaltungseinheit, weiterhin eine Vorrichtung, die dieses Verfahren verwendet, sowie schließlich ein entsprechendes Computerprogramm gemäß den unabhängigen Ansprüchen 1, 10, 11 und 12 vorgestellt. Durch die in den abhängigen Ansprüchen aufgeführten Maßnahmen sind vorteilhafte Weiterbildungen und Verbesserungen des im unabhängigen Anspruch 1 angegebenen Verfahrens möglich.

Der hier vorgeschlagene Ansatz schafft ein Verfahren zum Überwachen eines Zustandes einer elektronischen Schaltungseinheit eines Fahrzeugs, wobei das Verfahren die folgenden Schritte aufweist:
- Ausführen einer ersten Verarbeitungsvorschrift auf einem ersten Rechenwerk der elektronischen Schaltungseinheit, um ein erstes Verarbeitungsergebnis zu erhalten und Ausführen einer von der ersten Verarbeitungsvorschrift unterschiedlichen zweiten Verarbeitungsvorschrift auf einem zweiten Rechenwerk der elektronischen Schaltungseinheit, um ein zweites Verarbeitungsergebnis zu erhalten, wobei das zweite Rechenwerk ausgebildet ist, die zweite Verarbeitungsvorschrift unabhängig von dem ersten Rechenwerk auszuführen;
- Erkennen eines fehlerfreien Zustandes der elektronischen Schaltungseinheit, wenn das zweite Verarbeitungsergebnis in einem vorbestimmten Zusammenhang zu dem ersten Verarbeitungsergebnis und/oder einem vordefinierten Kriterium steht und/oder wenn das erste Verarbeitungsergebnis in einem vorbestimmten Zusammenhang zu dem zweiten Verarbeitungsergebnis und/oder dem vordefinierten Kriterium steht, wobei der Schritt des Erkennens in einem Sicherheitsbereich der elektronischen Schaltungseinheit ausgeführt wird, wobei der Sicherheitsbereich der elektronischen Schaltungseinheit ein Schutzmodul aufweist, das ausgebildet ist, um eine gegenüber dem ersten oder zweiten Rechenwerk besser vor einer fehlerhaften Abarbeitung geschützte Ausführung von Algorithmen sicherzustellen.

Unter einem Überwachen eines Zustands einer elektronischen Schaltungseinheit kann die Erkennung einer fehlerhaften Arbeitsweise der elektronischen Schaltungseinheit verstanden werden. Die elektronische Schaltungseinheit kann beispielsweise eine integrierte Schaltung sein, die Komponenten aufweist, die in einem gemeinsamen Gehäuse untergebracht oder gar auf einem gleichen Herstellungssubstrat wie beispielsweise einem Halbleiterwafer hergestellt wurden. Unter einer Verarbeitungsvorschrift kann ein Algorithmus oder eine Abfolge von Arbeitsbefehlen für einen Computer oder eine automatisierte Rechenanlage verstanden werden. Unter einem Rechenwerk kann eine beliebige Art von Vorrichtung verstanden werden, die zur Ausführung und Abarbeitung von Befehlen eines Algorithmus ausgelegt ist. Beispielsweise kann unter einem Rechenwerk ein Mikrocontroller, ein digitaler Signalprozessor, ein FPGA, ein ASIC oder eine andere CPU-Einheit verstanden werden, die mit einer Abfolge von Befehlen zur Ausführung der Verarbeitungsvorschrift geladen werden kann, oder in das bereits diese Verarbeitungsschrift nicht-flüchtig eingeschrieben wurde. Unter einem Verarbeitungsergebnis kann hier ein numerischer Wert oder eine Menge von Einzelergebnissen, beispielsweise eine Menge von erkannten Objekten und/oder Positionen von solchen Objekten in einem Bereich um das Fahrzeug verstanden werden. Unter einem vordefinierten Kriterium kann beispielsweise ein Schwellenwert oder Grenzwert verstanden werden, der nicht überschritten werden sollte oder alternativ nicht unterschritten werden sollte. Unter einem vorbestimmten Zusammenhang der Verarbeitungsergebnisse kann beispielsweise verstanden werden, dass das erste Verarbeitungsergebnis größer, kleiner oder insbesondere gleich bzw. innerhalb eines Toleranzbereichs von beispielsweise 10 % gleich dem zweiten Verarbeitungsergebnis ist. Mit anderen Worten kann dies bedeuten, dass ein Absolutwert einer Differenz zwischen erstem und zweitem Verarbeitungsergebnis kleiner ist als die Breite des Toleranzbereichs.

Unter einem Schutzmodul kann beispielsweise eine doppelte Implementierung der entsprechenden Schaltungsstruktur (beispielsweise Rechnerkernen) zur Ausführung von Operationen im Sicherheitsbereich der elektronischen Schaltungseinheit verstanden werden, wobei lediglich bei identischem Ergebnis der auf den beiden Entscheidungsstrukturen ausgeführten Algorithmen als fehlerfrei ausgeführt gewertet wird. Der Sicherheitsbereich der elektronischen Schaltungseinheit kann somit beispielsweise einen ersten Rechnerkern aufweisen, der analog zu einem vorstehend genannten Rechenwerk aufgebaut ist, wobei das Schutzmodul beispielsweise in einem zum ersten Rechnerkern identischen zweiten Rechnerkern besteht, auf dem eine identische, beispielsweise parallele Abarbeitung eines Rechen- oder Vergleichsalgorithmus wie auf dem ersten Rechnerkern erfolgt. Wenn die aus der Abarbeitung des betreffenden Rechen- oder Vergleichsalgorithmus resultierenden Rechen- oder Vergleichsergebnisse auf dem ersten Rechnerkern und den zweiten Rechnerkern dann identisch oder zumindest innerhalb eines Toleranzbereichs von 10 Prozent gleich sind, können die Rechenergebnisse als gültig betrachtet werden.

Der hier vorgeschlagene Ansatz basiert auf der Erkenntnis, dass durch die Ausführung von verschiedenen Verarbeitungsvorschriften auf voneinander unabhängigen Rechenwerken ein Fehler in der Hardware zumindest eines der Rechenwerke technisch schnell und einfach erkannt werden kann, wenn die jeweiligen Verarbeitungsergebnisse der auf den unterschiedlichen Rechenwerken ausgeführten Verarbeitungsvorschriften miteinander verglichen werden. Hierbei kann ausgenutzt werden, dass ein vorbestimmter Zusammenhang dieser Verarbeitungsergebnisse schon zuvor bekannt ist oder ein gewisses Verarbeitungsergebnis bei der Ausführung einer Verarbeitungsvorschrift eines Rechenwerkes erwartet werden kann. Dies ist insbesondere dann vorteilhaft, wenn sich die erste und zweite Verarbeitungsvorschrift voneinander unterscheiden, also wenn zwei unterschiedliche Verarbeitungsvorschriften auf dem jeweiligen ersten und zweiten Rechenwerk ausgeführt werden bzw. wenn sich die erste Verarbeitungsvorschrift von der zweiten Verarbeitungsvorschrift unterscheidet. Der hier vorgeschlagene Ansatz bietet somit die Möglichkeit, auch in Hardwareumgebungen, die standardmäßig weniger gegen fehlerhafte Bearbeitung der Algorithmen gesichert sind als ein besonderer Sicherheitsbereich der integrierten Schaltung bzw. elektronischen Schaltungseinheit, dennoch ausgenutzt werden können, um eine Funktion oder einen Zustand der elektronischen Schaltungseinheit des Fahrzeugs auf Fehlerfreiheit zu überwachen. Dies kann insbesondere ausgenutzt werden, wenn eine hohe Anzahl von sicherheitskritischen Funktionen wie Fahrzeugsteuerungsfunktionen oder Fahrerassistenzfunktionen im Fahrzeug, beispielsweise wie die Motor- oder Getriebesteuerung oder die Auslösung einer Notbremsung überwacht werden soll, wozu die in dem Sicherheitsbereich der integrierten Schaltung verfügbaren numerischen oder schaltungstechnischen Ressourcen nicht ausreichen würden und hierzu auf wenige gesicherte Bereiche der integrierten Schaltungen bzw. der elektronischen Schaltungseinheit zurückgegriffen werden sollen, die in modernen Prozessoren meist bereits vorhanden sind.

Günstig ist eine Ausführungsform des hier vorgestellten Ansatzes, bei der im Schritt des Ausführens ein erstes und zweites Rechenwerk verwendet wird, die in einem gemeinsamen Gehäuse der elektronischen Schaltungseinheit angeordnet sind, insbesondere wobei das erste und zweite Rechenwerk auf und/oder in einem gemeinsamen Herstellungssubstrat hergestellt sind. Eine solche Ausführungsform des hier vorgestellten Ansatzes bietet den Vorteil, dass unterschiedliche Bereiche oder Rechnerkerne der elektronischen Schaltungseinheit, die entsprechende Rechenwerke aufweisen, parallel genutzt werden können, um dennoch eine hohe Sicherheitsfunktion bei dem Einsatz der elektronischen Schaltungseinheit zu gewährleisten.

Von Vorteil ist ferner eine Ausführungsform des hier vorgestellten Ansatzes, bei der im Schritt des Ausführens eine erste und/oder zweite Verarbeitungsvorschrift verwendet werden, die eine Fahrzeugfunktion und/oder eine Fahrerassistenzfunktion implementiert, insbesondere wobei die Fahrzeugfunktion eine Motorsteuerung, eine Getriebesteuerung und/oder eine Steuerung von Personenschutzmitteln implementiert und/oder wobei die Fahrerassistenzfunktion eine Erkennung einer Fahrspur eines Fahrzeugs, eine Erkennung eines Fußgängers und/oder eine Bewertung einer Kollisionsfreiheit einer Bewegungstrajektorie eines Fahrzeugs implementiert. Unter einer Fahrzeugfunktion kann vorliegend beispielsweise eine beliebige Steuerfunktion des Fahrzeugs, beispielsweise eine Steuerung eines Personenschutzmittels wie eines Airbags oder eines reversiblen Insassenrückhaltesystems, eine Motorsteuerung oder eine Getriebesteuerung verstanden werden. Unter einer Fahrerassistenzfunktion kann eine Funktion verstanden werden, die eine Unterstützung eines Fahrers bei Tätigkeiten bietet, die der Fahrer auch ohne die Fahrerassistenzfunktion, dann aber mit einem erhöhten Aufwand oder einer erhöhten Aufmerksamkeit durchführen könnte. Eine solche Ausführungsform des hier vorgestellten Ansatzes bietet den Vorteil einer besonders zuverlässigen und sicheren Erkennung des Zustands einer elektronischen Schaltungseinheit, die im sicherheitskritischen Bereich der Implementierung von Fahrzeugfunktionen und/oder Fahrerassistenzfunktionen eingesetzt werden soll.

Denkbar ist ferner eine weitere Ausführungsform des hier vorgestellten Ansatzes, bei der im Schritt des Ausführens die erste und zweite Verarbeitungsvorschrift ausgebildet sind, um ein innerhalb eines Toleranzbereichs gleiches erstes und zweites Verarbeitungsergebnis zu liefern, wobei im Schritt des Erkennens der fehlerfreie Zustand der elektronischen Schaltungseinheit dann erkannt wird, wenn das erste Verarbeitungsergebnis innerhalb des Toleranzbereichs gleich dem zweiten Verarbeitungsergebnis ist. Unter einem Toleranzbereich kann hier beispielsweise verstanden werden, dass das erste Verarbeitungsergebnis um nicht mehr als 10 % vom zweiten Verarbeitungsergebnis abweicht. Eine solche Ausführungsform des hier vorgestellten Ansatzes bietet den Vorteil, durch eine diversitäre Berechnung des ersten und zweiten Verarbeitungsergebnisses in der ersten und zweiten Verarbeitungsvorschrift technisch sehr einfach die korrekte Funktion des ersten und zweiten Rechenwerks überprüfen zu können. Hierbei kann beispielsweise in der ersten Verarbeitungsvorschrift die Reihenfolge von Verarbeitungsbefehlen gegenüber der Reihenfolge von Verarbeitungsbefehlen in der zweiten Verarbeitungsvorschrift verändert sein. Hierdurch lässt sich sehr einfach die korrekte Arbeitsweise des ersten und zweiten Rechenwerks überprüfen.

Gemäß einer weiteren Ausführungsform des hier vorgeschlagenen Ansatzes kann im Schritt des Ausführens die zweite Verarbeitungsvorschrift auf das erste Verarbeitungsergebnis angewandt werden, wobei im Schritt des Erkennens der fehlerfreie Zustand der elektronischen Schaltungseinheit dann erkannt wird, wenn das zweite Verarbeitungsergebnis einem Ausgangswert oder Initialwert entspricht, der bei Anwendung der ersten Verarbeitungsvorschrift zu dem ersten Verarbeitungsergebnis führt. Eine solche Ausführungsform des hier vorgeschlagenen Ansatzes bietet den Vorteil, dass durch die zweite Verarbeitungsvorschrift eine Umkehrfunktion bzw. -operation der durch die erste Verarbeitungsvorschrift bewirkten Funktion oder Operation erfolgen kann, wobei durch eine "Hin- und Zurückberechnung" durch die erste und zweite Verarbeitungsvorschrift in einigen Situationen eine numerisch oder schaltungstechnisch sehr einfache Überprüfung der fehlerfreien Arbeitsweise des ersten und zweiten Rechenwerks erfolgen kann.

Von Vorteil ist auch eine weitere Ausführungsform des hier vorgeschlagenen Ansatzes, bei dem im Schritt des Ausführens die zweite Verarbeitungsvorschrift auf das erste Verarbeitungsergebnis angewandt wird, wobei die zweite Verarbeitungsvorschrift zur Filterung des ersten Verarbeitungsergebnisses ausgebildet ist. Auch eine solche Verarbeitungsvorschrift bietet den Vorteil einer technisch sehr einfachen Umsetzung des hier vorgeschlagenen Konzeptes. Insbesondere kann unter einer Filterung eine Reduktion einer Menge von Einzelergebnissen im entsprechenden Verarbeitungsergebnis verstanden werden, beispielsweise wobei die herausgefilterten und verworfenen Einzelergebnisse einem Filterkriterium nicht entsprechend.

Besonders günstig ist eine Ausführungsform des hier vorgeschlagenen Ansatzes, bei dem die Schritte des Ausführens und Erkennens wiederholt ausgeführt werden, wobei bei einem nachfolgend ausgeführten Schritt des Ausführens die erste Verarbeitungsvorschrift auf dem zweiten Rechenwerk und die zweite Verarbeitungsvorschrift auf dem ersten oder einem vom ersten und zweiten Rechenwerk unterschiedlichen dritten Rechenwerk der elektronischen Schaltungseinheit ausgeführt werden. Eine solche Ausführungsform des hier vorgeschlagenen Ansatzes bietet durch die Rotation der Ausführungen von entsprechenden Verarbeitungsvorschriften auf unterschiedlichen Rechenwerken die Möglichkeit der sehr präzisen Erkennung von Hardwarefehlern in den entsprechenden einzelnen Rechenwerken.

Eine weitere Ausführungsform des hier vorgeschlagenen Ansatzes zur hochgenauen Erkennung des Zustandes der elektronischen Schaltungseinheit lässt sich dadurch implementieren, dass im Schritt des Ausführens die erste und zweite Verarbeitungsvorschrift auf unterschiedlichen Initialdaten angewandt wird, um das erste und zweite Verarbeitungsergebnis zu erhalten. Unter Initialdaten kann hier ein Startwert verstanden werden, der aus Eingangswert für die Verarbeitung in der ersten und zweiten Verarbeitungsvorschrift dient.

Von Vorteil ist ferner eine Ausführungsform des hier vorgeschlagenen Ansatzes, bei dem zur Ausführung des Schritts des Erkennens eine geringere Rechenleistung erforderlich ist, als eine Ausführung des Schritts des Ausführens. Eine solche Ausführungsform des hier vorgestellten Ansatzes bietet den Vorteil einer besonders ressourceneffizienten Ausnutzung der zur Verfügung stehenden Rechenleistung, wobei dennoch eine fehlerhafte Arbeitsweise der elektronischen Schaltungseinheit mit hoher Sicherheit erkannt werden kann.

Die hier vorgestellten Verfahren können beispielsweise in Software oder Hardware oder in einer Mischform aus Software und Hardware beispielsweise in einem Steuergerät implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 ein Blockschaltbild eines Fahrzeugs mit einer Vorrichtung gemäß einem Ausführungsbeispiel des hier vorgestellten Ansatzes;
Fig. 2 ein Ablaufdiagramm eines Verfahrens gemäß einem Ausführungsbeispiel des hier vorgestellten Ansatzes;
Fig. 3 ein Blockschaltbild einer elektronischen Schaltungseinheit zur Verwendung in einem Ausführungsbeispiel des hier vorgestellten Ansatzes; und
Fig. 4 ein weiteres Blockschaltbild einer elektronischen Schaltungseinheit zur Verwendung in einem Ausführungsbeispiel des hier vorgestellten Ansatzes.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

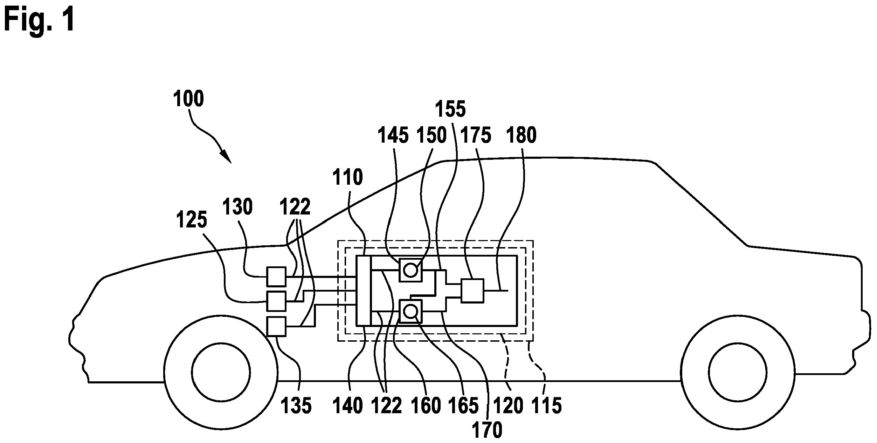

Fig. 1 zeigt ein Blockschaltbild eines Fahrzeugs 100, in dem eine Vorrichtung 110 gemäß einem Ausführungsbeispiel des hier vorgestellten Ansatzes verwendbar ist. Das Fahrzeug 100 umfasst hierbei beispielsweise ein Fahrerassistenzsystem 115 mit einer elektronischen Schaltungseinheit 120, um verschiedene Fahrerassistenzfunktionen ausführen zu können, wie beispielsweise die Erkennung einer Fahrspur des Fahrzeugs 100, die Erkennung eines Fußgängers vor oder neben dem Fahrzeug 100 oder die Bewertung der Kollisionsfreiheit einer Fahrzeugtrajektorie gegenüber einem Objekt in dieser Fahrzeugtrajektorie des Fahrzeugs 100. Hierbei ist es jedoch besonders wichtig, die fehlerfreie Funktion dieses Fahrerassistenzsystems 115 bzw. der die Funktionen des Fahrerassistenzsystems 115 ausführenden elektronischen Schaltungseinheit 120 sicherzustellen. Insbesondere soll vermieden werden, dass beispielsweise durch Hardwarefehler in der elektronischen Schaltungseinheit 120 dieses Fahrerassistenzsystems 115 Fehlfunktionen verursacht werden, die gravierende Konsequenzen für die Fahrtsicherheit des Fahrzeugs 100 haben. Beispielsweise könnte durch eine solche Fehlfunktion eine irrtümliche Notbremsung des Fahrzeugs 100 eingeleitet werden, was einerseits zu einer Verletzungsgefahr für die Fahrzeuginsassen und/oder eine Unfallgefahr durch ein auffahrendes nachfolgendes Fahrzeug führen könnte. In modernen Steuergeräten oder Ausführungseinheiten für die Algorithmen der Fahrerassistenzfunktionen liegen zwar schon besonders gegen Fehlfunktionen gesicherte Schaltungsstrukturen vor, jedoch wird die zunehmende Automatisierung von Fahrfunktionen oder Assistenzfunktionen ein erhöhter Bedarf von solchen gesicherten Schaltungsstrukturen erforderlich. Um diesem Erfordernis Rechnung zu tragen, könnten zwar Schaltungseinheiten verwendet werden, die eine größere Anzahl von solchen gesicherten Schaltungsstrukturen, die beispielsweise eine doppelte Anzahl von entsprechenden Rechnerkernen aufweist, dies würde jedoch zu einem erhöhten Aufwand für die einzusetzenden Schaltungen und somit zu einem einer für die Implementierung dieser Fahrerassistenzfunktionen führen.

Analog ist in vielen Fahrzeugen 100 ebenfalls eine oder mehrere elektronische Schaltungseinheit(en) implementiert, die Fahrzeugfunktionen ausführen, wie beispielsweise die Durchführung von Motor- oder Getriebesteuerungsfunktionen oder die Ansteuerung von Personenschutzmitteln wie Airbags oder Fußgängerschutzsystemen. Auch für solche elektronische Schaltungseinheiten sollte analog zu der vorstehend genannten Problematik der hohen Sicherheit bei Fahrerassistenzsystemen sichergestellt werden, dass diese elektronischen Schaltungseinheiten fehlerfrei funktionieren, sodass auch hier eine besondere Sicherheitsarchitektur verwendet werden sollte.

Gegenüber der Verwendung von solchen Schaltungseinheiten mit einer derartigen größeren Anzahl von gesicherten Schaltungsstrukturen wird im hier vorgeschlagenen Ansatz ein Weg aufgezeigt, wie mit einer herkömmlichen elektronischen Schaltungseinheit 120 eine ähnlich sichere Funktionsweise des Fahrerassistenzsystems 115 bzw. eines entsprechenden Fahrzeugsteuerungssystems gewährleistet werden kann, indem der Zustand der elektronischen Schaltungseinheit 120 sehr günstig überwacht werden kann. Eine solche Überwachung des Zustands der elektronischen Schaltungseinheit 120 kann beispielsweise dadurch erfolgen, dass Daten 122 von einem oder mehreren Sensoren wie beispielsweise einem Beschleunigungssensor 125, einem Drucksensor 130 oder einem Radarsensor 135 über eine Einleseschnittstelle 140 in die Vorrichtung 110 zum Überwachen des Zustands der elektronischen Schaltungseinheit 120 eingelesen werden. Diese Daten 122 oder ein Teil dieser Daten 122 können dann in einem ersten Rechenwerk 145 unter Verwendung einer ersten Verarbeitungsvorschrift 150 verarbeitet werden, um ein erstes Verarbeitungsergebnis 155 zu erhalten. Die erste Verarbeitungsvorschrift 150 kann hierbei ein spezieller Algorithmus oder eine Abfolge von Befehlen sein, unter deren Zuhilfenahme die Daten 122 oder ein Teil dieser Daten 122 verarbeitet wird/werden.

Das erste Verarbeitungsergebnis 155 kann hierbei ein konkreter Wert oder auch eine Menge von Werten sein, die beispielsweise Objekte oder deren Positionen im Raum um das Fahrzeug 100 darstellen.

Analog können auch die Daten 122, ein Teil dieser Daten 122 oder das erste Verarbeitungsergebnis 155 in ein zweites Rechenwerk 160 übertragen werden, in der eine zweite Verarbeitungsvorschrift 165 auf diese Daten 122 oder das erste Verarbeitungsergebnis 155 angewandt wird, um ein zweites Verarbeitungsergebnis 170 zu erhalten. Das erste Rechenwerk 145 soll dabei unabhängig vom zweiten Rechenwerk 160 arbeiten, also die Ausführung von Befehlen im ersten Rechenwerk 145 unabhängig von Zuständen oder ausgeführten Befehlen im zweiten Rechenwerk 160 sein. Auch hier kann die zweite Verarbeitungsvorschrift 165 ein spezieller Algorithmus oder eine Abfolge von Befehlen sein, unter deren Zuhilfenahme die Daten 122 ein Teil dieser Daten 122 verarbeitet wird/werden. Das zweite Verarbeitungsergebnis 170 kann ebenfalls wieder ein konkreter Wert oder eine Menge von Werten sein, die beispielsweise Objekte oder deren Position im Raum das Fahrzeug 100 darstellen. In einer Erkennungseinheit 175 können nun das erste Verarbeitungsergebnis 155 und/oder das zweite Verarbeitungsergebnis 170 verwendet werden, um den fehlerfreien Zustand der elektronischen Schaltungseinheit 120 zu erkennen. Die Erkennungseinheit 175 ist in einem Sicherheitsbereich der elektronischen Schaltungseinheit 120 angeordnet, wobei der Sicherheitsbereich der elektronischen Schaltungseinheit 120 ein Schutzmodul aufweist, das ausgebildet ist, um eine gegenüber dem ersten 145 oder zweiten Rechenwerk 160 besser vor einer fehlerhaften Abarbeitung geschützte Ausführung von Algorithmen sicherzustellen.

Dieses Erkennen des fehlerfreien Zustands der elektronischen Schaltungseinheit 120, der beispielsweise als Signal 180 ausgegeben wird, kann beispielsweise dann erfolgen, wenn das zweite Verarbeitungsergebnis 170 in einem vorbestimmten Zusammenhang zum ersten Verarbeitungsergebnis 155 und/oder einem vordefinierten Kriterium wie beispielsweise einem Schwellenwert steht. Alternativ oder zusätzlich kann der fehlerfrei Zustand der elektronischen Schaltungseinheit 120 dann erkannt werden, wenn das erste Verarbeitungsergebnis 155 in einem vorbestimmten Zusammenhang zu dem zweiten Verarbeitungsergebnis 170 und/oder einem vordefinierten Kriterium wie beispielsweise einem Schwellenwert steht. Beispielsweise können dabei das erste Verarbeitungsergebnis 155 und/oder zweite Verarbeitungsergebnis 170 größer, kleiner, gleich oder innerhalb eines vorbestimmten Toleranzbereichs von beispielsweise 10 % gleich einem solchen Schwellenwert als vordefiniertem Kriterium sein, um den fehlerfreien Zustand der elektronischen Schaltungseinheit zu erkennen.

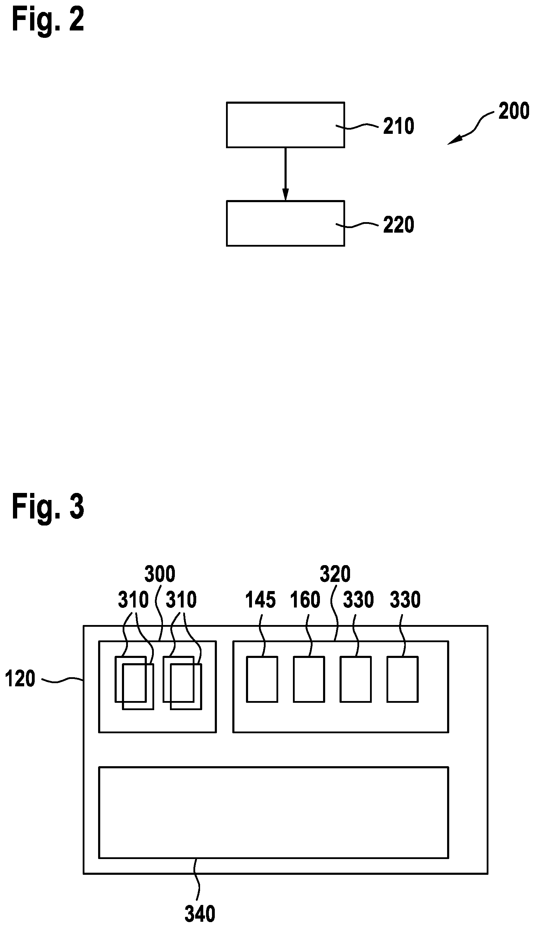

Fig. 2 zeigt ein Ablaufdiagramm eines Ausführungsbeispiels des hier vorgestellten Ansatzes als Verfahren 200 zum Überwachen eines Zustandes einer elektronischen Schaltungseinheit eines Fahrzeugs. Das Verfahren 200 umfasst einen Schritt 210 des Ausführens einer ersten Verarbeitungsvorschrift auf einem ersten Rechenwerk der elektronischen Schaltungseinheit, um ein erstes Verarbeitungsergebnis zu erhalten und Ausführen einer von der ersten Verarbeitungsvorschrift unterschiedlichen zweiten Verarbeitungsvorschrift auf einem zweiten Rechenwerk der elektronischen Schaltungseinheit, um ein zweites Verarbeitungsergebnis zu erhalten, wobei das zweite Rechenwerk ausgebildet ist, die zweite Verarbeitungsvorschrift unabhängig von dem ersten Rechenwerk auszuführen. Ferner umfasst das Verfahren 200 einen Schritt 220 des Erkennens eines fehlerfreien Zustandes der elektronischen Schaltungseinheit, wenn das zweite Verarbeitungsergebnis in einem vorbestimmten Zusammenhang zu dem ersten Verarbeitungsergebnis und/oder einem vordefinierten Kriterium steht und/oder wenn das erste Verarbeitungsergebnis in einem vorbestimmten Zusammenhang zu dem zweiten Verarbeitungsergebnis und/oder dem vordefinierten Kriterium steht, wobei der Schritt 220 des Erkennens in einem Sicherheitsbereich der elektronischen Schaltungseinheit ausgeführt wird, wobei der Sicherheitsbereich der elektronischen Schaltungseinheit ein Schutzmodul aufweist, das ausgebildet ist, um eine gegenüber dem ersten oder zweiten Rechenwerk besser vor einer fehlerhaften Abarbeitung geschützte Ausführung von Algorithmen sicherzustellen.

Der hier vorgeschlagene Ansatz bietet somit eine vorteilhafte Möglichkeit, ein verbessertes Sicherheitskonzept für Fahrerassistenzsysteme umzusetzen. Dabei wird ein Konzept vorgeschlagen, mit dem gleichzeitig die Beherrschung von funktionalen Unzulänglichkeiten und eine Hardware-Absicherung angemessen dargestellt werden können.

Im Verlauf der Sicherheitsanalyse einer Anwendungs-Funktion werden Teilfunktionen des Fahrerassistenzsystems 115 identifiziert, die angemessen sicher darzustellen sind. In dem hier vorgestellten Ansatz werden diese Teilfunktionen als unterschiedliche Verarbeitungsvorschriften oder als DSF (Design Sicherheitsfunktion) bezeichnet, die besonders sicher funktionieren sollten, um keine Gefährdung von Fahrzeuginsassen oder Personen oder Objekten außerhalb des Fahrzeugs 100 verursachen. Besondere Beispiele von solchen Verarbeitungsvorschriften oder DSFs können sein:
- Erkennung der Fahrspur des Fahrzeugs 100
- Erkennung von Fußgängern außerhalb des Fahrzeugs 100
- Bewertung einer Kollisionsfreiheit einer Fahrt-Trajektorie des Fahrzeugs 100.

Zur Beherrschung funktionaler Unzulänglichkeiten bei der Umsetzung einer DSF ist es oft sinnvoll, bei der algorithmischen Realisierung der DSF (mindestens) zwei verschiedene Teile DSF_1 und DSF_2 zu verwenden, die beide einen Beitrag leisten. Dabei kann beispielsweise die erste Verarbeitungsvorschrift 150 als erster Teil "DSF_1" und die zweite Verarbeitungsvorschrift 165 als zweiter Teil "DSF_2" gemäß der vorstehenden Beschreibung verstanden oder bezeichnet werden. Nur wenn beide Beiträge versagen, tritt dann ein kritischer Systemfehler der elektronischen Schaltungseinheit 120 auf. Dies kann z. B. folgendermaßen umgesetzt werden:
- Diversitäre Berechnung, d. h. Berechnung auf zwei verschiedene Weisen. In diesem Fall haben DSF_1150 und DSF_2 165 haben im Wesentlichen die gleiche Aufgabe. Die Verarbeitungsvorschriften 150 bzw. 165 sollen somit auf ein zumindest im Wesentlichen gleiches Ergebnis führen, auch wenn die Abfolge oder Struktur der Befehle der Verarbeitungsvorschriften verändert ist.
- Prüfroutine: Das Ergebnis eines Teils wird vom anderen plausibilisiert. Beispielsweise kann durch das zweite Verarbeitungsergebnis 170 aus DSF_2 das erste Verarbeitungsergebnis 155 der ersten Verarbeitungsvorschrift DSF_1 plausibilisiert werden. Ein solches Vorgeben bietet den Vorteil, dass beispielsweise bei einer numerisch oder schaltungstechnisch aufwendigen Umsetzung der ersten Verarbeitungsvorschrift 150 das erste Verarbeitungsergebnis deutlich einfacher überprüft werden kann, wenn eine sehr einfache Umkehroperation auf diese aufwendige erste Verarbeitungsvorschrift 155 als zweite Verarbeitungsvorschrift 165 verwendet wird.
- Nachgeordneter Filter: Es kann auch die zweite Verarbeitungsvorschrift 165 bzw. DSF 2 das erste Verarbeitungsergebnis 155 weiterverarbeiten und dabei Fehler der ersten Verarbeitungsvorschrift 150 bzw. DSF 1 ausfiltern.

Es gibt noch weitere, auch gemischte Formen. Die Form der algorithmischen Verschiedenheit und des Zusammenspiels wird hier nicht weiter betrachtet, ist jedoch auch nicht durch den hier vorgestellten Ansatz ausgeschlossen.

Wichtig ist es, dass es (mindestens) zwei Teile gibt, die ein möglichst unabhängiges Ausfallverhalten zeigen sollen und somit möglichst auf zwei unterschiedlichen Rechenwerken 145 bzw. 160 oder Rechnerkernen ausgeführt werden sollten. Dann ist es ein wichtiger Aspekt des hier vorgestellten Ansatzes, dass diese beiden Teile auf verschiedenen Cores, wenn möglich auch verschiedenen Caches und sogar getrennten RAM-Bereichen ablaufen.

Der Hauptvorteil des hier vorgestellten Ansatzes ist es, dass es hierdurch möglich ist, Mechanismen, die zur Beherrschung von funktionalen Unzulänglichkeiten eingeführt werden, wie eben die Einführung mehrerer Teilfunktionen DSF_1 und DSF_2, auch zur Hardwareabsicherung zu verwenden, da es so unter Umständen möglich ist, hohe Coverages für die Core-, Cache- und RAM-Absicherung zu argumentieren.

Ein Blockschaltbild einer möglichen Hardware-Architektur eines leistungsfähigen Chips bzw. einer entsprechenden elektronischen Schaltungseinheit 120 für Fahrerassistenz- und hoch automatisierte Systeme ist in der Fig. 3 gezeigt.

Im Chip bzw. der elektronischen Schaltungseinheit 120 gibt es ein "Safe Island", d. h. eine abgesicherte Rechenplattform als Sicherheitsbereich 300 der elektronischen Schaltungseinheit 120 die einen oder mehrere Hardwareabgesicherte Cores oder Rechnerkerne 310 enthält. Eine solche Absicherung kann beispielsweise durch ein Sicherheitsmodul erfolgen, das eine Verdopplung der entsprechenden Rechnerkerne 310 vorsieht und lediglich dann, wenn eine auf beiden Rechnerkernen 310 identisch ausgeführte Verarbeitungsvorschrift auch identische Ergebnisse liefert, eine fehlerfreie Abarbeitung dieser Verarbeitungsvorschrift annimmt. Vorzugsweise sind diese Rechnerkerne 310 beispielsweise als Lockstep-Rechner ausgeprägt. Diese Rechnerplattform bzw. der Sicherheitsbereich 300 stellt im besten Fall eine ASIL D taugliche Plattform dar, die neben den verwendeten Cores 310 auch die hierbei verwendeten Caches absichert. Es ist nicht damit zu rechnen, dass die gesamte Rechenleistung, die zur Darstellung der vorstehend genannten entsprechenden Funktionen beispielsweise der Fahrerassistenz oder der Fahrzeugfunktion wie der Motor- oder Personenrückhaltemittelansteuerung notwendig ist, auf diesem Safe Island 300 zur Verfügung gestellt werden kann. Deshalb gibt es eine Rechenleistungszone 320 die mehrere sehr leistungsfähige Cores aufweist, welche beispielsweise als erstes Rechenwerk 145, als zweites Rechenwerk 160 oder weiteres Rechenwerke 330 bezeichnet werden können. Auf dem Chip gibt es noch weitere Komponenten 340 (z. B. Kommunikation, I/0, Vorverarbeitung, ...), die aber hier nicht weiter relevant sind und daher nicht näher beschrieben werden.

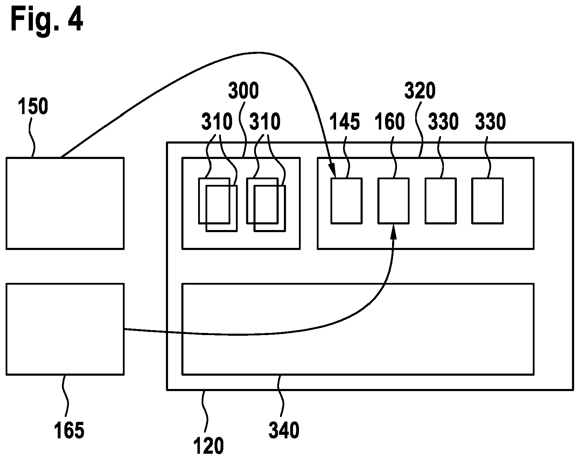

Die DSF bzw. Verarbeitungsvorschriften, die nicht auf dem Safe Island 300 ausgeführt werden, sollten unter Umständen in Komponenten 320 der Rechenleistungszone 320 abgearbeitet werden. Dies findet so statt, dass die Bestandteile bzw. Verarbeitungsvorschriften DSF_1 und DSF_2 der DSF auf zwei verschiedene Cores bzw. Rechenwerke 145 und 160 der Rechenleistungszone 320 verteilt bzw. zur Abarbeitung auf diese Rechenwerke geladen werden, wie dies in Blockschaltbild-Darstellung gemäß der Fig. 4 wiedergegeben ist. Damit können DSF_1150 und DSF_2 165 nicht direkt durch den gleichen Hardware-Fehler in einem der Cores 145 bzw. 160 beeinflusst werden, insbesondere ist ein gleichartiger Einfluss hinreichend unwahrscheinlich. Typischerweise hat jeder der Cores 145, 160 bzw. 330 einen eigenen L1-Cache. Für diesen Cache erzeugt dieses Verfahren also zusätzlich ein Absicherungsargument (bezogen auf die DSF). Natürlich ist es dennoch vorteilhaft, wenn der L1-Cache zusätzlich durch geeignete Maßnahmen (z. B. Parity, ECC, Tag Protection, Reencoding, ...) abgesichert ist. Eine Common-Cause-Analyse sollte anwendungsspezifisch natürlich durchgeführt werden. Diese kann zu weiteren Anforderungen führen, durch deren Erfüllung die Unabhängigkeit der beiden Teile erhöht werden kann. Beispielsweise ist es möglich, dass verschiedene Bibliotheken verwendet werden sollten, damit L2-Cache-Fehler keine direkten Auswirkungen haben können.

Grundsätzlich ist es sinnvoll, möglichst mächtige Tests der Cores 145, 160 bzw. 330 zur Verfügung zu haben. Diese sollten wenn möglich Hardware-unterstützte BISTs (Builtin Self Test)sein, eine Software-Lösung ist aber auch denkbar. Abhängig von der Häufigkeit einer Verschiedenheit der beiden Varianten durch funktionale Unzulänglichkeiten ist es möglich, einen Test auch gezielt dann zu aktivieren, wenn eine Verschiedenheit festgestellt wurde. Wenn genügend Cores und Rechenleistung vorhanden ist, kann als Test dann auch ein Kreuzvergleich mit einem redundant arbeitenden "Spare"-Core betrachtet werden. Die Zusammenführung der beiden Teilergebnisse von DSF_1 und DSF_2 sollte vorzugsweise durch das "Safe Island" bzw. die Einheit(en) 310 im Sicherheitsbereich 300 geschehen, die besonders gegenüber einer fehlerhaften Algorithmusabarbeitung gesichert sind. Falls eine Architektur ohne "Safe Island" 300 gewählt werden soll, dann lässt sich die Zusammenführung auch auf je beiden Cores implementieren, dabei sollte jedoch sichergestellt werden, dass Einzelfehler sich nicht auf beide Cores 145 bzw.160 auswirken.

Die jeweilige erste und zweite Verarbeitungsvorschrift 150 bzw. 165 kann durch die in den Figuren 3 und 4 nicht dargestellte Vorrichtung 110 zum Überwachen in das erste bzw. zweite Rechenwerk 145 und 160 geladen werden. Auch die Auswertung bzw. das Erkennen des fehlerfreien Zustands der elektronischen Schaltungseinheit 120 anhand des ersten und/oder zweiten Verarbeitungsergebnisses 155 bzw. 170 kann in einer entsprechenden Einheit 175 vorgenommen werden, die in einigen Ausführungsbeispielen durch die Rechnerkerne 310 des Sicherheitsbereichs gebildet werden kann, die jedoch auch durch nicht in den Figuren 3 und 4 dargestellte Einheiten implementiert sein kann.

Es ist klar, dass das hier vorgestellte Verfahren auch auf drei und mehr Bestandteile ausgeweitet werden kann. Dann ist gegebenenfalls auch ein Voting und somit eine Fehlertoleranzschicht darstellbar.

Erweiternd kann es eine vorteilhafte Option sein, die betroffenen Cores periodisch zu wechseln. Z. B. kann in einem Zyklus das Paar (DSF 1,DSF_2) auf den Core C1, C2 bzw. 145 und 160 gerechnet werden. Im nächsten Zyklus auf (C2, bzw. 160 und C3 bzw. 330) usw. bis (Cn, C1). Was eine in der Software-Komplexität noch beherrschbare Zyklusgröße ist (von Systemperiode bis Fahrzyklus), ist im Einzelfall festzulegen. Prinzipiell ist es vorteilhaft, wenn die Teile (DSF_1, DSF_2) sogar, was die Input-Daten 122 angeht verschiedenen sind. Optimal im Sinne der Robustheit ist es, wenn verschiedene (möglichst diversitäre) Sensordaten verwendet werden. Dies ist allerdings nicht notwendig.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Überwachen eines Zustandes einer elektronischen Schaltungseinheit (120) eines Fahrzeugs (100), wobei das Verfahren (200) die folgenden Schritte aufweist:
- Ausführen (210) einer ersten Verarbeitungsvorschrift (150) auf einem ersten Rechenwerk (145) der elektronischen Schaltungseinheit (120), um ein erstes Verarbeitungsergebnis (155) zu erhalten und Ausführen (210) einer von der ersten Verarbeitungsvorschrift (150) unterschiedlichen zweiten Verarbeitungsvorschrift (165) auf einem zweiten Rechenwerk (160) der elektronischen Schaltungseinheit (120), um ein zweites Verarbeitungsergebnis (170) zu erhalten, wobei das zweite Rechenwerk (160) ausgebildet ist, die zweite Verarbeitungsvorschrift (165) unabhängig von dem ersten Rechenwerk (145) auszuführen;
wobei das Verfahren **gekennzeichnet ist durch** die folgenden Schritte:
- Erkennen (220) eines fehlerfreien Zustandes (180) der elektronischen Schaltungseinheit (120), wenn das zweite Verarbeitungsergebnis (170) in einem vorbestimmten Zusammenhang zu dem ersten Verarbeitungsergebnis (155) und/oder einem vordefinierten Kriterium steht und/oder wenn das erste Verarbeitungsergebnis (155) in einem vorbestimmten Zusammenhang zu dem zweiten Verarbeitungsergebnis (170) und/oder dem vordefinierten Kriterium steht, wobei der Schritt des Erkennens (220) in einem Sicherheitsbereich (300) der elektronischen Schaltungseinheit (120) ausgeführt wird, wobei der Sicherheitsbereich (300) der elektronischen Schaltungseinheit (120) ein Schutzmodul aufweist, das ausgebildet ist, um eine gegenüber dem ersten (145) oder zweiten (160) Rechenwerk besser vor einer fehlerhaften Abarbeitung geschützte Ausführung von Algorithmen sicherzustellen.

2. Verfahren (200) gemäß Anspruch 1, **dadurch gekennzeichnet, dass** im Schritt des Ausführens (210) die erste (150) und zweite Verarbeitungsvorschrift (165) ausgebildet sind, um ein innerhalb eines Toleranzbereichs gleiches erstes (155) und zweites Verarbeitungsergebnis (170) zu liefern, wobei im Schritt des Erkennens (220) der fehlerfreie Zustand (180) der elektronischen Schaltungseinheit (120) dann erkannt wird, wenn das erste Verarbeitungsergebnis (155) innerhalb des Toleranzbereichs gleich dem zweiten Verarbeitungsergebnis (170) ist.

3. Verfahren (200) gemäß einem der vorangegangenen Ansprüche, **dadurch gekennzeichnet, dass** im Schritt des Ausführens (210) die zweite Verarbeitungsvorschrift (165) auf das erste Verarbeitungsergebnis (155) angewandt wird, wobei im Schritt des Erkennens (220) der fehlerfreie Zustand der elektronischen Schaltungseinheit (120) dann erkannt wird, wenn das zweite Verarbeitungsergebnis (170) einem Initialwert (122) entspricht, der bei Anwendung der ersten Verarbeitungsvorschrift (150) zu dem ersten Verarbeitungsergebnis (155) führt.

4. Verfahren (200) gemäß einem der vorangegangenen Ansprüche, **dadurch gekennzeichnet, dass** im Schritt des Ausführens (210) die zweite Verarbeitungsvorschrift (165) auf das erste Verarbeitungsergebnis (155) angewandt wird, wobei die zweite Verarbeitungsvorschrift (165) zur Filterung des ersten Verarbeitungsergebnisses (155) ausgebildet ist.

5. Verfahren (200) gemäß einem der vorangegangenen Ansprüche, **dadurch gekennzeichnet, dass** die Schritte des Ausführens (210) und Erkennens (220) wiederholt ausgeführt werden, wobei bei einem nachfolgend ausgeführten Schritt des Ausführens (210) die erste Verarbeitungsvorschrift (150) auf dem zweiten Rechenwerk (160) und die zweite Verarbeitungsvorschrift (165) auf dem ersten (145) oder einem vom ersten (145) und zweiten Rechenwerk (160) unterschiedlichen dritten Rechenwerk (330) der elektronischen Schaltungseinheit (120) ausgeführt werden.

6. Verfahren (200) gemäß einem der vorangegangenen Ansprüche, **dadurch gekennzeichnet, dass** im Schritt des Ausführens (210) die erste (150) und zweite Verarbeitungsvorschrift (165) auf unterschiedlichen Initialdaten (122) angewandt wird, um das erste (155) und zweite Verarbeitungsergebnis (170) zu erhalten.

7. Verfahren (200) gemäß einem der vorangegangenen Ansprüche, **dadurch gekennzeichnet, dass** zur Ausführung des Schritts (220) des Erkennens eine geringere Rechenleistung erforderlich ist, als eine Ausführung des Schritts (210) des Ausführens.

8. Verfahren (200) gemäß einem der vorangegangenen Ansprüche, **dadurch gekennzeichnet, dass** im Schritt des Ausführens (210) ein erstes (145) und zweites (160) Rechenwerk verwendet wird, die auf und/oder in einem gemeinsamen Herstellungssubstrat hergestellt sind, insbesondere wobei das erste (145) und zweite Rechenwerk (160) in einem gemeinsamen Gehäuse der elektronischen Schaltungseinheit (120) angeordnet sind.

9. Verfahren (200) gemäß einem der vorangegangenen Ansprüche, **dadurch gekennzeichnet, dass** im Schritt des Ausführens (210) eine erste und/oder zweite Verarbeitungsvorschrift (165) verwendet werden, die eine Fahrzeugfunktion und/oder Fahrerassistenzfunktion implementiert, insbesondere wobei die Fahrzeugfunktion eine Motorsteuerung, eine Getriebesteuerung und/oder eine Steuerung von Personenschutzmitteln implementiert und/oder wobei die Fahrerassistenzfunktion eine Erkennung einer Fahrspur eines Fahrzeugs (100), eine Erkennung eines Fußgängers und/oder eine Bewertung einer Kollisionsfreiheit einer Bewegungstrajektorie eines Fahrzeugs (100) implementiert.

10. Vorrichtung (110), die eingerichtet ist, das Verfahren (200) gemäß einem der vorangegangenen Ansprüche auszuführen.

11. Computerprogramm, das, wenn es auf einem Computer ausgeführt wird, dazu eingerichtet ist, das Verfahren (200) gemäß einem der vorangegangenen Ansprüche auszuführen.

12. Maschinenlesbares Speichermedium, auf dem das Computerprogramm nach Anspruch 11 gespeichert ist.

## Claims

1. Method (200) for monitoring a state of an electronic circuit unit (120) of a vehicle (100), wherein the method (200) has the following steps:
- executing (210) a first processing rule (150) on a first computing unit (145) of the electronic circuit unit (120), in order to obtain a first processing result (155), and executing (210) a second processing rule (165), which is different from the first processing rule (150), on a second computing unit (160) of the electronic circuit unit (120), in order to obtain a second processing result (170), wherein the second computing unit (160) is designed to execute the second processing rule (165) independently of the first computing unit (145);
wherein the method is **characterized by** the following steps:
- detecting (220) a fault-free state (180) of the electronic circuit unit (120) if the second processing result (170) is in a predetermined relationship with the first processing result (155) and/or with a predefined criterion and/or if the first processing result (155) is in a predetermined relationship with the second processing result (170) and/or the predefined criterion, wherein the detection step (220) is carried out in a safety region (300) of the electronic circuit unit (120), wherein the safety region (300) of the electronic circuit unit (120) has a protection module which is designed to ensure that algorithms are executed with better protection against faulty processing with respect to the first computing unit (145) or second computing unit (160).

2. Method (200) according to Claim 1, **characterized in that** in the execution step (210) the first (150) and second processing rules (165) are configured in order to supply a first (155) processing result and second processing result (170) which are the same within a tolerance range, wherein in the detection step (220) the fault-free state (180) of the electronic circuit unit (120) is detected when the first processing result (155) is equal to the second processing result (170) within the tolerance range.

3. Method (200) according to one of the preceding claims, **characterized in that** in the execution step (210) the second processing rule (165) is applied to the first processing result (155), wherein in the detection step (220) the fault-free state of the electronic circuit unit (120) is detected when the second processing result (170) corresponds to an initial value (122) which gives rise to the first processing result (155) when the first processing rule (150) is applied.

4. Method (200) according to one of the preceding claims, **characterized in that** in the execution step (210) the second processing rule (165) is applied to the first processing rule (155), wherein the second processing result (165) is designed to filter the first processing result (155).

5. Method (200) according to one of the preceding claims, **characterized in that** the execution step (210) and detection step (220) are executed repeatedly, wherein in the case of a subsequently executed execution step (210) the first processing rule (150) is executed on the second computing unit (160) and the second processing rule (165) is executed on the first computing unit (145) or on a third computing unit (330), different from the first computing unit (145) and second computing unit (160), of the electronic circuit unit (120).

6. Method (200) according to one of the preceding claims, **characterized in that** in the execution step (210) the first (150) and second processing rules (165) are applied to different initial data (122), in order to obtain the first (155) and second processing results (170).

7. Method (200) according to one of the preceding claims, **characterized in that** smaller computing power is necessary to execute the detection step (220) than to execute the execution step (210).

8. Method (200) according to one of the preceding claims, **characterized in that** in the execution step (210) a first computing unit (145) and a second computing unit (160) are used, which are manufactured on and/or in a common manufacturing substrate, in particular wherein the first computing unit (145) and second computing unit (160) are arranged in a common housing of the electronic circuit unit (120).

9. Method (200) according to one of the preceding claims, **characterized in that** in the execution step (210) a first processing rule and/or second processing rule (165), which influence a vehicle function and/or driver assitance function, is used, in particular wherein the vehicle function implements an engine control process, a gearbox control process and/or a process of controlling passenger protection means, and/or wherein the driver assistance function implements detection of a lane of a vehicle (100), detection of a pedestrian and/or evaluation of freedom from collision of a motion trajectory of a vehicle (100).

10. Device (110) which is configured to execute the method (200) according to one of the preceding claims.

11. Computer program which is configured, when executed on a computer, to execute the method (200) according to one of the preceding claims.

12. Machine-readable storage medium on which the computer program according to Claim 11 is stored.

## Revendications

1. Procédé (200) de surveillance d'un état d'une unité de circuit électronique (120) d'un véhicule (100), le procédé (200) comprenant les étapes suivantes :
- exécution (210) d'une première prescription de traitement (150) sur une première unité de calcul (145) de l'unité de circuit électronique (120) en vue d'obtenir un premier résultat de traitement (155) et exécution (210) d'une deuxième prescription de traitement (165), différente de la première prescription de traitement (150), sur une deuxième unité de calcul (160) de l'unité de circuit électronique (120) afin d'obtenir un deuxième résultat de traitement (170), la deuxième unité de calcul (160) étant configurée pour exécuter la deuxième prescription de traitement (165) indépendamment de la première unité de calcul (145) ;
le procédé étant **caractérisé par** les étapes suivantes :
- reconnaissance (220) d'un état exempt de défaut (180) de l'unité de circuit électronique (120) lorsque le deuxième résultat de traitement (170) se trouve dans une relation prédéterminée par rapport au premier résultat de traitement (155) et/ou en présence d'un critère prédéfini et/ou lorsque le premier résultat de traitement (155) se trouve dans une relation prédéterminée par rapport au deuxième résultat de traitement (170) et/ou en présence du critère prédéfini, l'étape de reconnaissance (220) étant exécutée dans une zone de sécurité (300) de l'unité de circuit électronique (120), la zone de sécurité (300) de l'unité de circuit électronique (120) possédant un module de protection qui est configuré pour garantir une exécution d'algorithmes mieux protégée contre un déroulement erroné en comparaison de la première (145) ou de la deuxième (160) unité de calcul.

2. Procédé (200) selon la revendication 1, **caractérisé en ce que** dans l'étape d'exécution (210), la première (150) et la deuxième prescription de traitement (165) sont configurées pour délivrer un premier (155) et un deuxième résultat de traitement (170) identique au sein d'une plage de tolérance, l'état exempt de défaut (180) de l'unité de circuit électronique (120) étant reconnu dans l'étape de reconnaissance (220) lorsque le premier résultat de traitement (155) est identique au deuxième résultat de traitement (170) à l'intérieur de la plage de tolérance.

3. Procédé (200) selon l'une des revendications précédentes, **caractérisé en ce que** dans l'étape d'exécution (210), la deuxième prescription de traitement (165) est appliquée sur le premier résultat de traitement (155), l'état exempt de défaut de l'unité de circuit électronique (120) étant reconnu dans l'étape de reconnaissance (220) lorsque le deuxième résultat de traitement (170) correspond à une valeur initiale (122) qui, lors de l'application de la première prescription de traitement (150), mène au premier résultat de traitement (155).

4. Procédé (200) selon l'une des revendications précédentes, **caractérisé en ce que** dans l'étape d'exécution (210), la deuxième prescription de traitement (165) est appliquée sur le premier résultat de traitement (155), la deuxième prescription de traitement (165) étant configurée pour filtrer le premier résultat de traitement (155).

5. Procédé (200) selon l'une des revendications précédentes, **caractérisé en ce que** les étapes d'exécution (210) et de reconnaissance (220) sont exécutées de manière répétée, lors d'une étape d'exécution (210) exécutée ensuite, la première prescription de traitement (150) étant exécutée sur la deuxième unité de calcul (160) et la deuxième prescription de traitement (165) sur la première (145) ou une troisième unité de calcul (330), différente de la première (145) et de la deuxième unité de calcul (160) de l'unité de circuit électronique (120).

6. Procédé (200) selon l'une des revendications précédentes, **caractérisé en ce que** dans l'étape d'exécution (210), la première (150) et la deuxième prescription de traitement (165) sont appliquées sur des données initiales (122) différentes en vue d'obtenir le premier (155) et le deuxième résultat de traitement (170) .

7. Procédé (200) selon l'une des revendications précédentes, **caractérisé en ce que** pour l'exécution de l'étape (220) de la reconnaissance, une puissance de calcul plus faible est nécessaire que pour une exécution de l'étape (210) de l'exécution.

8. Procédé (200) selon l'une des revendications précédentes, **caractérisé en ce que** dans l'étape d'exécution (210), une première (145) et une deuxième (160) unité de calcul sont utilisées, lesquelles sont fabriquées sur et/ou dans un substrat de fabrication commun, la première (145) et la deuxième (160) unité de calcul étant notamment disposées dans un boîtier commun de l'unité de circuit électronique (120).

9. Procédé (200) selon l'une des revendications précédentes, **caractérisé en ce que** dans l'étape d'exécution (210), une première et/ou une deuxième prescription de traitement (165) sont utilisées, lesquelles mettent en oeuvre une fonction de véhicule et/ou une fonction d'assistance au conducteur, la fonction de véhicule mettant en particulier en oeuvre une commande de moteur, une commande de boîte de vitesses et/ou une commande de moyens de protection de personnes et/ou la fonction d'assistance au conducteur mettant en oeuvre une reconnaissance d'une voie de circulation d'un véhicule (100), une reconnaissance d'un piéton et/ou une évaluation d'une absence de collision d'une trajectoire de déplacement d'un véhicule (100).

10. Dispositif (110), qui est conçu pour mettre en oeuvre le procédé (200) selon l'une des revendications précédentes.

11. Programme informatique qui, lorsqu'il est exécuté sur un ordinateur, est conçu pour mettre en oeuvre le procédé (200) selon l'une des revendications précédentes.

12. Support d'enregistrement lisible par machine sur lequel est enregistré le programme informatique selon la revendication 11.
